# EUROPÄISCHE PATENTSCHRIFT

(11) **EP 3 366 975 B1**
(45) Veröffentlichungstag und Bekanntmachung des Hinweises auf die Patenterteilung: **29.12.2021**
(21) Anmeldenummer: 17157536.8
(22) Anmeldetag: 23.02.2017
(51) Int. Cl.: F17C 1/00, F17C 1/16

(54) **POLKAPPE MIT DRUCKANSCHLUSSELEMENT FÜR DRUCKBEHÄLTER**
POLE CAP WITH PRESSURE CONNECTION ELEMENT FOR PRESSURE VESSELS
CALOTTE POLAIRE COMPRENANT UN ÉLÉMENT DE RACCORD PAR PRESSION POUR UN RÉCIPIENT SOUS PRESSION

(43) Veröffentlichungstag der Anmeldung: 29.08.2018
(73) Patentinhaber: NPROXX B.V., 6422 RK Heerlen (NL)
(72) Erfinder: Bäumer, Thomas, 41836 Hückelhoven (DE); Castenholz, Claus, 53879 Euskirchen (DE)
(74) Vertreter: FARAGO Patentanwälte

(56) Entgegenhaltungen:
- EP-A2- 0 271 483
- WO-A1-2011/047752
- DE-A1- 2 152 123
- DE-A1- 2 538 433
- JP-A- H10 231 997
- US-A1- 2008 187 697
- US-A1- 2016 123 538

## Beschreibung

### Gebiet der Erfindung

Die Erfindung betrifft eine Polkappe aus einem Kunststoffmaterial zum druckdichten Verschluss eines Druckbehälters; einen Druckbehälter mit einer solchen Polkappe, ein Verfahren zur Herstellung einer solchen Polkappe sowie ein Verfahren zur Herstellung eines solchen Druckbehälters.

### Hintergrund der Erfindung

Der Markt für faserverstärkte Druckbehälter aus Faserverbundmaterial wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern im gasförmigen oder flüssigen Zustand gespeichert werden soll. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte faserverstärkte (CFK) Druckbehälter besitzen einen zylindrischen Mittelteil, auf dem sich beidseitig Polkappen zum Verschluss des Mittelteils befinden und werden beispielsweise mit einem Faser-Wickelverfahren hergestellt. Dabei wird ein Liner (Innenbehälter für den Druckbehälter) verwendet, der einerseits als Wickelkern fungiert und andererseits auch die Dichtigkeit des Behälters garantiert. Dieser Liner wird dann zur Herstellung des Druckbehälters zur Verstärkung mit Faserverbundmaterial überwickelt, damit der daraus resultierende Druckbehälter seine Stabilität erhält. Bei den Druckbehältern Type 3 wird ein metallischer Liner aus Aluminium oder Stahl eingesetzt, bei Type 4 Druckbehälter ist es ein Liner aus Kunststoff. Letztere Druckbehälter sind den technischen Anforderungen gewachsen und lassen sich kostengünstig herstellen. Kunststoffliner können beispielsweise mittels eines Schweißverfahrens, mittels eines sogenannten Rotomoulding-Verfahrens oder mittels eines Schlauchblasverfahrens hergestellt werden. Bei einem Schweißverfahren wird ein extrudiertes Rohr mit entsprechendem Durchmesser, Wandstärke und Länge hergestellt und an beide Seiten eine passende Polkappe angeschweißt. Dabei sind beide Seiten der Polkappen erreichbar, was bei den anderen Verfahren nicht der Fall ist.

Aus der deutschen Offenlegungsschrift DE 25 38 433 A1 ist ein Druckgasbehälter bekannt, der aus einem formstabilen, gasdichten und in seinem mittleren Bereich zylindrischen Innenbehälter mit zwei von außen auf die Böden des Innenbehälters koaxial aufgesetzten Polstücken und einem unter Erfassung der Polstücke auf den Innenbehälter gewickelten Außenmantel aus glasfaserverstärktem Kunststoff bersteht, wobei ein Boden des Innenbehälters und das mit einem flanschförmigen Teil darauf aufgesetzte Polstück mit einer Öffnung zum dichten Anschluß eines Anschlußstückes versehen sind und der Innenbehälter an seinem Offnungsrand einen arge formten axialen, zylindrischen Hals aufweist, dessen Kontur mit der des Polstückes und des Anschlußstückes übereinstimmt und der durch das mit dem Polstück durch Schraubverbindungen zusammenhängenden Anschlußstück radial gegen das Polstück gepreßt wird. Der Innenbehälterhals, die Innenkontur des Polstückes und die Außenkontur des Anschlußstückes sind sich konisch nach außen verengend ausgebildet.

Problematisch bei diesen Druckbehältern ist unter anderem der notwendige metallische Anschluss für ein Druckbehälterventil an solche CFK-Druckbehälter mit Plastikliner. Dabei muss sich das metallische Anschlussstück (auch Boss oder Lineranschluss genannt) einfach montieren lassen und über die gesamte Lebensdauer des Druckbehälters leckdicht mit dem Liner verbunden bleiben.

Es wäre daher wünschenswert, ein Anschlussstück für den Innenbehälter (Lineranschluss) zur Verfügung zu haben, der leicht zu montieren ist und über die gesamte Lebensdauer leckdicht mit dem Liner verbunden bleibt.

### Zusammenfassung der Erfindung

Es ist daher eine Aufgabe der Erfindung, ein Anschlussstück für den Innenbehälter zur Verfügung zu stellen, das leicht zu montieren ist und über die gesamte Lebensdauer leckdicht mit dem Innenbehälter (Liner) verbunden bleibt.

Diese Aufgabe wird gelöst durch die Polkappe gemäß Anspruch 1.

Druckbehälter im Sinne der Erfindung sind alle geeigneten Behälter zur Speicherung von Fluiden oder Gasen mit einem gegenüber der Umgebung des Druckbehälters erhöhten Druck, die einen Innenbehälter aus Kunststoffmaterial und eine Verstärkung aus Faserverbundmaterial umfassen. In der Regel sind diese Druckbehälter zylinderförmig mit nach außen gewölbten Abschlüssen auf beiden Seiten des zylinderförmigen Mittelteils. Diese Anschlüsse werden als Polkappen bezeichnet und dienen zum druckdichten Verschluss des Mittelteils. Die Innenseite der Polkappe ist dabei im späteren Druckbehälter Teil der zur Füllung (Fluid oder Gas) des Druckbehälters zugewandten Innenwand des Druckbehälters. Entsprechend ist die Außenseite die entgegengesetzte Seite der Polkappe. Zur Verstärkung des Druckbehälters wird diese Außenseite mit einem Faserverbundmaterial überwickelt, was gleichzeitig die Außenseite des Druckbehälters bilden kann. Nach dem Verschweißen der Polkappen mit dem Mittelteil ist ein Innenbehälter hergestellt, dessen Druckdichtigkeit nur noch von der Druckdichtigkeit der Polkappe mit dem Druckanschlusselement, insbesondere dem Dichtkonus, abhängt. Mit der erfinderischen Polkappe ist diese Polkappe druckdicht ausgestaltet und damit der gesamte Innenbehälter druckdicht ausgestaltet.

Um den Druckbehälter mit einer Füllung zu versehen beziehungsweise diese Füllung aus dem Druckbehälter wieder entnehmen zu können, muss der Druckbehälter eine reversibel verschließbare Öffnung umfassen. Eine solche Öffnung ist bei Druckbehältern in einer der Polkappe über eine halsförmige aus der Außenseite nach außen herausragende offene Durchführung angeordnet, in die ein Druckanschlusselement zum Verschluss der Durchführung mit einer Innenkontur angeordnet ist. Die konusförmige Kontur des Dichtkörpers ermöglicht es, dass ein von der Innenseite der Polkappe in die Durchführung eingeführter Dichtkonus einen Presssitz in der Innenkontur der halsförmigen Durchführung einnimmt. Hierbei kann der Dichtkonus beispielsweise bei Innenkonturen der halsförmigen Durchführung, die nicht auf die Konusform des zweiten Abschnitts des Dichtkonus angepasst sind, das Material der Polkappe im Bereich der Innenkontur so verdrängen, dass sich die Innenkontur an die konusförmige Kontur des zweiten Abschnitts anschmiegt. Der Dichtkonus bildet dann mit weiteren Komponenten das Druckanschlusselement, über das die Füllung in den Druckbehälter eingelassen beziehungsweise aus diesem ausgelassen werden kann. Eine von der Außenseite her auf dem Druckanschlusselement angeordnetes Fixierungsmittel (beispielsweise eine Zugmutter oder ein im Dichtkonus einschnappender Federring) bewirkt, dass der Dichtkonus in die Durchführung hineingezogen (gepresst) wird beziehungsweise in der hineingezogenen (gepressten) Position verbleibt und somit mit seiner Außenseite so in der Innenkontur der Durchführung anliegt, dass durch die Durchführung keine unter Überdruck stehende Füllung des Druckbehälters entweichen kann.

Die Polkappe selber besteht (wie auch der restliche Innenbehälter) aus Gewichts-und Kostengründen dabei aus Kunststoffmaterial. Kunststoffmaterial kann sich aufgrund des im Druckbehälter herrschenden Drucks über die Betriebszeit verformen, sodass zwischen Anschlussstück und Polkappe Leckagen auftreten könnten. Die erfindungsgemäße Polkappe verhindert durch ihre Konstruktion mit dafür speziell ausgestalteter Durchführung und entsprechendem Druckanschlusselement, dass sich das Kunststoffmaterial der halsförmigen Durchführung verformen kann und stellt damit eine Polkappe mit Anschlussstück für den Innenbehälter zur Verfügung, das leicht zu montieren ist und über die gesamte Lebensdauer leckdicht mit der Polkappe und damit mit dem späteren Innenbehälter (Liner) verbunden bleibt. Die erfindungsgemäße Konstruktion der Polkappe mit Druckanschlusselement wurde so geändert, dass das Kunststoffmaterial auch bei sehr hohen Flächenpressungen aufgrund des Innendrucks des Druckbehälters nicht mehr an der Verbindungsfläche zwischen Druckanschlusselement und halsförmiger Durchführung wegfließen kann, weil hier der Kunststoff durch die konusförmige Form der Innenkontur der Durchführung und des Dichtkonus gekammert ist. Durch die konische Konstruktion des Dichtkonus und der sich entsprechend an den Dichtkonus anschmiegende Innenkontur der Durchführung ergibt sich ein verengender Spalt in Richtung nach außen, der die Abdichtung des Druckanschlusses bewirkt. Durch diesen sich verengenden Spalt müsste das Kunststoffmaterial fließen, wollte es unter der Flächenpressung des Dichtkonus wegfließen. Dies wäre aber nur durch weitere Erhöhung der Flächenpressung möglich, die nicht zustande kommt, da die Innenkontur der Durchführung auf der konusförmigen Kontur des Dichtkonus anliegt und über die so erreichten große Auflagefläche bei sehr guter Dichtwirkung nur eine relativ zum Stand der Technik geringe Flächenpressung pro Flächeneinheit verursacht. Im Stand der Technik sind Dichtkonus und Durchführung lediglich über ein Gewinde miteinander verbunden, in dem hohe lokale Drücke entstehen, durch die sich das Kunststoffmaterial unter dem Dichtkonus verformt und bei zu hoher Flächenpressung unter dem Dichtkonus wegfließen kann. Im Stand der Technik ist daher ein Kompromiss aus Anzugsdrehmoment und damit Dichtigkeit bei hohen Drücken und Überschreiten der Flächenpressung und Wegfließen des Kunststoffes von Nöten, was bewirkt, dass die Druckbehälter des Stands der Technik als nicht geeignet für sehr hohe Drücke sind. Druckbehälter mit der erfindungsgemäßen Polkappe sind dagegen bis zu den Drücken geeignet, bei denen die Faserverstärkung des Druckbehälters versagen würde. Mit der erfindungsgemäßen Konstruktion wird bei hohem Druck in dem Druckbehälter die Dichtwirkung des Dichtkonus dagegen weiter erhöht. Dazu wird der Dichtkonus aus Richtung des Druckbehälterinneren in die Halsöffnung der Durchführung gedrückt, was die Dichtwirkung erhöht. Durch das Fixierungsmittel auf der anderen Seite der Halsöffnung der Durchführung wird der Dichtkonus gezogen, bis er drehmomentgesteuert die Endposition erreicht hat oder bis er in dem Fixierungsmittel einrastet und somit in seiner vorgesehenen abdichtenden Position gehalten wird. Durch das Design des Dichtkonus ist die Fläche des Dichtkonus zugewandt zur Innenseite des Druckbehälters (großer Druck) größer als die Fläche des Dichtkonus zugewandt zur Außenseite des Druckbehälters (geringer Druck, z.B. Normaldruck). Die Differenz der Flächen multipliziert mit dem Gasdruck erzeugt eine dem Druck proportionale Kraft in Richtung der Dichtwirkung, somit erzeugt der Gasdruck eine höhere Dichtwirkung bei höherem Druck. Die erfindungsgemäße Polkappe mit Druckanschlusselement ist somit redundant gegen Undichtigkeiten.

Die Innenkontur verjüngt sich zumindest in einem Bereich der Durchführung konusförmig nach außen entlang der Durchführung, wobei die konusförmige Innenkontur auf den konusförmigen zweiten Abschnitt angepasst ist. Somit wird der Kraftschluss zwischen Dichtkonus und Innenkontur bessert, was die Dichtwirkung und den Sitz des Dichtkonus in der halsförmigen Durchführung verbessert. In einer bevorzugten Ausführungsform ist dazu die konusförmige Innenkontur dazu passgenau auf die Konusform des zweiten Abschnitts des Dichtkonus angepasst. Diese angepasste konusförmige Innenkontur ermöglicht es, dass ein entsprechend an die Form dieser Innenkontur angepasster Dichtkonus von der Innenseite der Polkappe in die Durchführung eingeführt werden kann, was zu einer weiteren Verbesserung führt.

Gemäß Anspruch 1 erstreckt sich die konusförmige Innenkontur der Durchführung von der Innenseite bis zum Halsende auf der Außenseite. Ein entsprechend auf die Ausdehnung der Innenkontur angepasst ausgeformter Dichtkonus besitzt somit eine größere Kontaktfläche mit der Innenkontur, was die Andruckkraft des Dichtkonus auf die Innenkontur auf eine größere Fläche verteilt und somit die Flächenpressung pro Flächeneinheit und damit die Gefahr eines Wegfließens des Kunststoffmaterials der halsförmigen Durchführung noch weiter verringert.

In einer weiteren Ausführungsform ragt der Dichtkonus mit seinem zweiten Abschnitt aus der Durchführung über die Innenseite hinaus. Hierdurch lässt sich beispielsweise die Zugmutter von Außen auf den Dichtkonus aufschrauben, was die Montage des Dichtkonus in der halsförmigen Durchführung erleichtert.

In einer weitere Ausführungsform umfasst die Polkappe des Weiteren ein Aufsatzelement zum Aufsetzen auf die halsförmige Durchführung, wobei das Aufsatzelement einen ersten Kontaktbereich, der sich flächenförmig in radialer Richtung von der halsförmigen Durchführung entlang der Außenseite erstreckt und an die Kontur der Außenseite angepasst und zur Überwicklung mit dem Faserverbundmaterial vorgesehen ist, und einen zweiten Kontaktbereich umfasst, dessen Innenform an eine Außenform der halsförmigen Durchführung so angepasst ist, dass der zweite Kontaktbereich eine Verformung der Außenform der halsförmigen Durchführung in radialer Richtung verhindert. Die Polkappe mit Aufsatzelement wird nach Montage des Aufsatzelements auf der halsförmigen Durchführung auf dieselbe Art und Weise mit Faserverbundmaterial überwickelt, wie die erfindungsgemäße Polkappe ohne ein solches Aufsatzelement. Die radiale Richtung bezeichnet hierbei die vom Zentrum der Durchführung wegweisende Richtung. Bei zylindrischen Druckbehältern sind die Polkappen ebenfalls von ihrem Umfang her kreisförmig ausgestaltet. In der Regel ist das Anschlusselement im Zentrum der Polkappe angeordnet, wodurch die radiale Richtung mit der radialen Richtung zur Symmetrieachse (Zylinderachse) des Druckbehälters zusammenfällt. Der erste Kontaktbereich des Aufsatzelement kann dabei auf die Außenseite aufgesetzt werden, die im Kontaktbereich für das Aufsatzelement besonders ausgestaltet ist , beispielsweise kann die Außenseite eine den Kontaktbereich aufnehmende Vertiefung aufweisen, sodass die Polkappe mit Aufsatzelement dieselbe Außenform besitzt wie eine Polkappe, die nicht für eine zusätzliche Bestückung mit einem Aufsatzelement vorgesehen ist. Hiermit lassen sich auch weichere Kunststoffe wie Polyethylen als Material für die Polkappen bzw. den Innenbehälter des Druckbehälters einsetzen, weil bei der erfindungsgemäßen Polkappe durch ihre Ausgestaltung die Dichtwirkung erhalten bleibt und man nicht Gefahr läuft, dass der Druckbehälter bei hohem Druck oder nach einer Vielzahl an Lastwechseln vorzeitig undicht wird.

In einer bevorzugten Ausführungsform umfasst die Außenform der Durchführung am Halsende einen umlaufenden Rand, vorzugsweise ist der Rand eine planare Fläche senkrecht zur Längsrichtung der Durchführung beziehungsweise des späteren Druckbehälters. Hierbei überdeckt der zweite Kontaktbereich den umlaufenden Rand zumindest teilweise, sodass eine Verformung der Außenform der Durchführung zusätzlich auch senkrecht zur radialen Richtung verhindert ist. In einer weiteren Ausführungsform erstreckt sich der zweite Kontaktbereich des Weiteren entlang des ersten Abschnitts des Dichtkonus, wobei der erste Abschnitt eine geeignet angeordnete und um den ersten Abschnitt umlaufende Dichtung zum druckdichten Abdichten gegenüber dem zweiten Kontaktbereich des Aufsatzelements umfasst.

In einer weiteren Ausführungsform ist das von außen auf dem ersten Abschnitt angeordnete Fixierungsmittel eine auf den ersten Abschnitt aufgeschraubte Zugmutter, mit der der zweite Abschnitt zum druckdichten Abschluss in die Innenkontur gezogen ist. Die Zugmutter kann dabei einerseits über ein Gewinde direkt oder indirekt am Dichtkonus befestigt sein und zieht andererseits direkt oder indirekt an der halsförmigen Durchführung, dass der Dichtkonus an die Innenkontur der Durchführung gepresst wird.

In einer weiteren Ausführungsform umfasst das Aufsatzelement des Weiteren einen dritten Bereich in Längsrichtung oberhalb des zweiten Kontaktbereichs, also in Längsrichtung gesehen auf der der Innenseite der Polkappe gegenüberliegenden Seite des zweiten Kontaktbereichs, der eine dem ersten Abschnitt zugewandte Innenseite umfasst, wobei die Innenseite des dritten Bereichs so angeordnet ist, dass eine umlaufende Lücke zwischen der Innenseite und dem ersten Abschnitt des Dichtkonus in radialer Richtung gebildet wird, wobei die Lücke zur Aufnahme der Zugmutter vorgesehen und ausgestaltet ist. Die Längsrichtung bezeichnet hier die Richtung entlang der Durchführung von innen nach außen beziehungsweise die Richtung entlang der Zylinderachse des späteren Druckbehälters. Durch den dritten Bereich wird die Zugmutter vor äußeren mechanischen Belastungen geschützt.

In einer weiteren Ausführungsform bildet der zweite Kontaktbereich einen Auflagebereich für die Zugmutter aus, sodass zusätzlich das Aufsatzelement mittels der Zugmutter über den auf die halsförmige Durchführung drückenden Auflagebereich auf der Polkappe befestigt ist. Somit lässt sich das Aufsatzelement ebenfalls leicht auf der Polkappe befestigen und über seine formunterstützende Wirkung auf die halsförmige Durchführung aus.

In einer weiteren Ausführungsform erstreckt sich die Innenform des zweiten Kontaktbereichs des Aufsatzelements entlang des ersten Abschnitts des Dichtkonus und besitzt in einem dem ersten Abschnitt gegenüberliegenden Bereich eine Aussparung, in der das von außen auf dem ersten Abschnitt angeordneten Fixierungsmittels in Form eines elastischen Federrings angeordnet ist, und der erste Abschnitt des Dichtkonus eine auf den Federring angepasste Ring-Aussparung an einer darauf angepassten Position entlang der Längsachse umfasst, in die der Federring nach einem Hineinpressen des Dichtkonus in die Durchführung einrastet und so den Dichtkonus in dem druckdichten Presssitz in der Innenkontur fixiert. Die Fixierung des Dichtkonus mittels Federring in einer durch Federring und Ring-Aussparung definierten Position ermöglicht die einfache und schnelle Herstellung eines Presssitzes, der einen druckdichten Sitz des Dichtkonus in der Durchführung darstellt. Der Federring kann dabei aus üblichen Materialien für Federringe mit üblichen Verfahren hergestellt sein, wodurch der Federring seine übliche Elastizität besitzt.

In einer weiteren Ausführungsform ist das Aufsatzelement mit seinem zweiten Kontaktbereich auf die Außenform der halsförmigen Durchführung aufgeschraubt, beispielsweise mittels eines selbstschneidenden Gewindes. Dadurch kann das Aufsatzelement unabhängig von einer später aufgeschraubten Zugmutter an der halsförmigen Polkappe befestigt werden. Die möglicherweise zusätzliche Befestigung des Aufsatzelements über Schraubverbindung und Andruck mittels Zugmutter erhöht die Sitzfestigkeit des Aufsatzelements an der halsförmigen Durchführung der Polkappe. Hierbei sind in einer weiteren Ausführungsform das Aufsatzelement und die halsförmige Durchführung so ausgestaltet, dass das Aufsatzelement bis zum direkten Kontakt des ersten Kontaktbereichs auf der Außenseite von oben auf die halsförmige Durchführung aufgeschraubt ist. Dadurch wird das Aufsatzelement sicher auf der Außenseite positioniert und es ist für den Monteur einfach zu erkennen, ob die Positionierung korrekt ist.

In einer weiteren Ausführungsform ist das Kunststoffmaterial zumindest der halsförmigen Durchführung der Polkappe ein weiches Kunststoffmaterial und der zweite Kontaktbereich des Aufsatzelements ist mit einem Gewinde zum selbstschneidenden Aufschrauben auf die Polkappe versehen. Dadurch wird eine Anordnung eines Gewindes auf der halsförmigen Durchführung vermieden, was den Herstellungsaufwand verringert.

Die Erfindung bezieht sich des Weiteren auf einen faserverstärkter Druckbehälter umfassend einen Innenbehälter aus einem Kunststoffmaterial umfassend ein zylinderförmiges Mittelteil und zwei das Mittelteil jeweils auf beiden Seiten verschließende Polkappen und eine auf den Innenbehälter gewickelte Außenschicht aus Faserverbundmaterial, wobei eine der Polkappen eine erfindungsgemäße Polkappe ist. Damit eine Füllung unter Druck in diesem Druckbehälter gespeichert werden kann, sind die Zylinderflächen des Mittelteils mit den Polkappen verschlossen. Bei einer halbkugelförmigen Geometrie der Polkappen würde ein Spannungsverhältnis von 2:1 zwischen Umfangsspannung (Spannung auf die Innenwand des zylindrischen Mittelteils) und axialer Spannung (Spannung auf die Deckelflächen) vorliegen, was den Randbereich zwischen Mittelteil und Polkappen stark beanspruchen würde. Diese Geometriebetrachtungen gelten für alle Druckbehälter, auch für solche aus einem Innenbehälter und einer über den Innenbehälter gewickelten Außenschicht zur Verstärkung des Innenbehälters, beispielsweise mit einem Innenbehälter aus Kunststoff. Solche Behälter besitzen einerseits ein sehr geringes Gewicht, was beispielsweise für Anwendungen in Transportmitteln wichtig ist, und andererseits können Füllungen wie beispielsweise Wasserstoff unter hohem Druck verlustarm gespeichert werden, da Kunststoff eine sehr geringe Wasserstoffpermeabilität besitzt und die benötigte Festigkeit durch die Außenschicht aus Faserverbundmaterial bereitgestellt wird. Der erfindungsgemäße Druckbehälter umfasst somit einen Innenbehälter mit Polkappen, die vorzugsweise als kuppelartige Polkappen mit einer von einer Halbkugel abweichenden Form, die im Deckel-Randbereich angrenzend an den zylindrischen Mittelteil des Innenbehälters eine stärkere Krümmung gegenüber einer Halbkugeloberfläche ausgebildet sind, während der Zentralbereich der Polkappen eine geringere Krümmung gegenüber einer Halbkugeloberfläche aufweist. Mit dieser kuppelartigen Polkappe kann der Steifigkeits- und Lastsprung und das dadurch verursachte Spannungsverhältnis zwischen Umfangsrichtung (Mittelteil) und axialer Richtung (Polkappenflächen) durch axial auf der Polkappe im Zentralbereich angeordnete erste Fasern besonders gut aufgenommen werden. Eine solche besonders geeignete kuppelförmige Polkappe wird auch als Isotensoid bezeichnet. Ein Isotensoid bezeichnet dabei eine Form, die in einer darauf gewickelten Außenschicht aus einem Faserverbundmaterial eine konstante Spannung in den Fasern in allen Punkten des Faserverlaufs bewirkt.

Ein Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Dadurch entsteht eine Faserschicht, auf die die Fasern in weiteren Faserschichten gewickelt werden, bis das Faserverbundmaterial die gewünschte Dicke besitzt und eine entsprechende Faserlage mit dieser Dicke darstellt. In einer Ausführungsform umfassen die Faserlagen aus ersten und/oder weiteren Fasern, beispielsweise zweiten Fasern, jeweils mehrere Faserschichten. Durch den Verbund erhält das Faserverbundmaterial höherwertige Eigenschaften, wie beispielsweise eine höher Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Die Erfindung betrifft des Weiteren ein Verfahren gemäß Anspruch 12.

Somit wird ein Verfahren bereitgestellt, mit dem eine Polkappe mit einem Anschlussstück für den Innenbehälter leicht herzustellen ist, die geeignet ist, über die gesamte Lebensdauer leckdicht mit dem Innenbehälter (Liner) verbunden zu bleiben

In einer Ausführungsform umfasst das Verfahren den weiteren Schritt des Aufsetzens eines Aufsatzelements auf die halsförmige Durchführung zur Verhinderung einer Verformung der Außenform der Durchführung in radialer Richtung, wobei das Aufsatzelement einen ersten Kontaktbereich, der sich flächenförmig in radialer Richtung von der halsförmigen Durchführung entlang der Außenseite erstreckt und an die Kontur der Außenseite angepasst und zur Überwicklung mit dem Faserverbundmaterial vorgesehen ist, und einen zweiten Kontaktbereich mit einer an eine Außenform der halsförmigen Durchführung angepassten Innenform umfasst.

In einer Ausführungsform des Verfahrens, wobei als das von außen auf dem ersten Abschnitt angeordnete Fixierungsmittels eine Zugmutter oder ein Federring ist, umfasst der Schritt des Herstellens des druckdichten Abschlusses einen der Schritt des
- Ausübens eines Zugs auf den Dichtkonus mittels der von außen auf den ersten Abschnitt aufgeschraubten Zugmutter, oder
- Hineinpressens des Dichtkonus in die Durchführung , wobei der Dichtkonus im ersten Abschnitt eine auf den Federring angepasste Ring-Aussparung an einer darauf angepassten Position entlang der Längsachse umfasst, und nachfolgendes Einrasten des Federrings in die Ring-Aussparung des Dichtkonus, wobei der Federring in eine Aussparung in der Innenform des zweiten Kontaktbereichs des Aufsatzelements, die sich entlang des ersten Abschnitts des Dichtkonus erstreckt, elastisch gehalten wird

Die Erfindung betrifft des Weiteren ein Verfahren gemäß Anspruch 15.

### Kurze Beschreibung der Abbildungen

Diese und andere Aspekte der Erfindung werden im Detail in den Abbildungen wie folgt gezeigt.
- Fig.1:: eine Ausführungsform einer erfindungsgemäßen Polkappe mit Druckanschlusselement;
- Fig.2:: eine andere Ausführungsform einer erfindungsgemäßen Polkappe mit Druckanschlusselement;
- Fig.3:: eine Ausführungsform eines erfindungsgemäßen Druckbehälters mit einer erfindungsgemäßen Polkappe;
- Fig.4:: eine weitere Ausführungsform eines erfindungsgemäßen Druckbehälters mit einer erfindungsgemäßen Polkappe;
- Fig.5:: eine Ausführungsform eines erfindungsgemäßen Verfahrens zur Herstellung der erfindungsgemäßen Polkappe; und
- Fig.6:: eine Ausführungsform eines erfindungsgemäßen Verfahrens zur Herstellung eines erfindungsgemäßen faserverstärkten Druckbehälters.

### Detaillierte Beschreibung der Ausführungsbeispiele

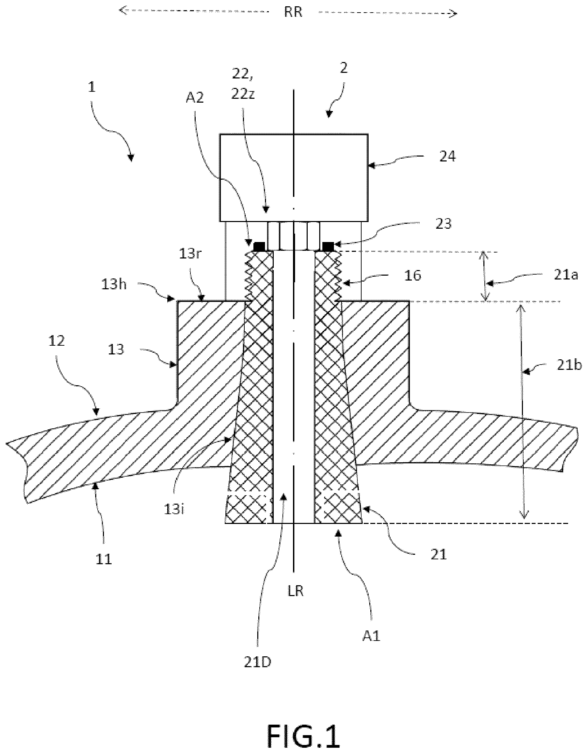

Fig.1 zeigt eine Ausführungsform einer erfindungsgemäßen Polkappe 1 mit Druckanschlusselement 2 geeignet zum druckdichten Verschluss eines Druckbehälters 100. Die Polkappe 1 umfasst dabei eine Innenseite 11, die zum späteren Verschluss des Druckbehälters 100 dem Inneren des Druckbehälters zugewandt ist, eine Außenseite 12 vorgesehen zur Überwicklung mit einem Faserverbundmaterial 3 nach Verschluss des Druckbehälters 100 und eine halsförmige aus der Außenseite nach außen herausragende offene Durchführung 13 mit einer konusförmigen Innenkontur 13i in einem weiten Bereich zwischen Innenseite 11 und Außenseite 12, die sich nach außen entlang der Durchführung 13 in diesem Bereich verjüngt, jeweils aus Kunststoffmaterial. Die Polkappe 1 umfasst des Weiteren ein an die Durchführung 13 zum Verschluss der Durchführung 13 angeschlossenes Druckanschlusselement 2, wobei das Druckanschlusselement 2 einen Dichtkonus 21 aus Metall mit einem durch die Durchführung 13 nach außen herausragenden ersten Abschnitt 21a und mit einem zumindest im Bereich der Durchführung 13 entsprechend an deren konusförmige Innenkontur 13i angepassten zweiten Abschnitt 21b umfasst. Der Abschnitt 21b weist eine zur Innenkontur 13i entsprechende äußere Konusform in Längsrichtung LR der Durchführung 13 mit einer kreisförmigen ersten Fläche A1 auf oder oberhalb der Innenseite 11 und eine kreisförmige zweite Fläche A2 zugewandt zur Außenseite 12 der Polkappe 1 auf, wobei in dieser Ausführungsform die ersten und zweiten Flächen A1 und A2 senkrecht zur Längsrichtung der Durchführung 13 ausgerichtet sind. Der Dichtkonus 21 hat des Weiteren in seinem Inneren einen zylinderförmigen Durchlasskanal 21D zur Befüllung des späteren Druckbehälters 100 mit Fluiden oder Gasen beziehungsweise zum Ablassen derselben. Dadurch, dass die erste Fläche A1 größer ist als die zweite Fläche A2 und auf der ersten Fläche A2 der hohe Innendruck des Druckbehälters 100 anliegt, wird der Dichtkonus 21 entsprechend des Flächenverhältnisses zwischen erster und zweiter Fläche A1, A2 bereits durch den Innendruck im Druckbehälter 100 in die konusförmige Innenkontur 13i der Durchführung 13 gepresst, sodass eine gute Dichtwirkung zwischen Dichtkonus 21 und Durchführung 13 gewährleistet ist. Zusätzlich wird der Dichtkonus 21 mittels einer von außen auf den ersten Abschnitt 21a aufgeschraubten Zugmutter 22z als das von außen auf dem ersten Abschnitt 21a angeordneten Fixierungsmittels 22 zum druckdichten Abschluss in die konusförmige Innenkontur 13i gepresst, indem die Zugmutter am Halsende 13h der halsförmigen Durchführung 13 auf den umlaufender Rand 13r der Durchführung 13 am Halsende 13h drückt und dadurch den Dichtkonus 21 in die Durchführung 13 zieht. Durch die Zugmutter 22z wird ein fester Sitz des Dichtkonus 21 in der Durchführung 13 auch in den Stadium gewährleistet, wo die Polkappe noch nicht auf den Mittelteil des Innenbehälters geschweißt ist oder der spätere Druckbehälter 100 noch nicht mit Innendruck beaufschlagt ist. Dazu ragt der Dichtkonus 21 mit seinem zweiten Abschnitt 21b aus der Durchführung 13 über die Innenseite 11 hinaus, was die Montage der Zugmutter 22z erleichtert. Die Form der Zugmutter 22z und das entsprechende Gewinde 16 in zweiten Abschnitte 21b des Dichtkonus 21 kann von Fachmann geeignet ausgestaltet werden. Gemäß Anspruch 1 erstreckt sich die konusförmige Innenkontur 13i der Durchführung 13 von der Innenseite 11 bis zum Halsende 13h auf der Außenseite.

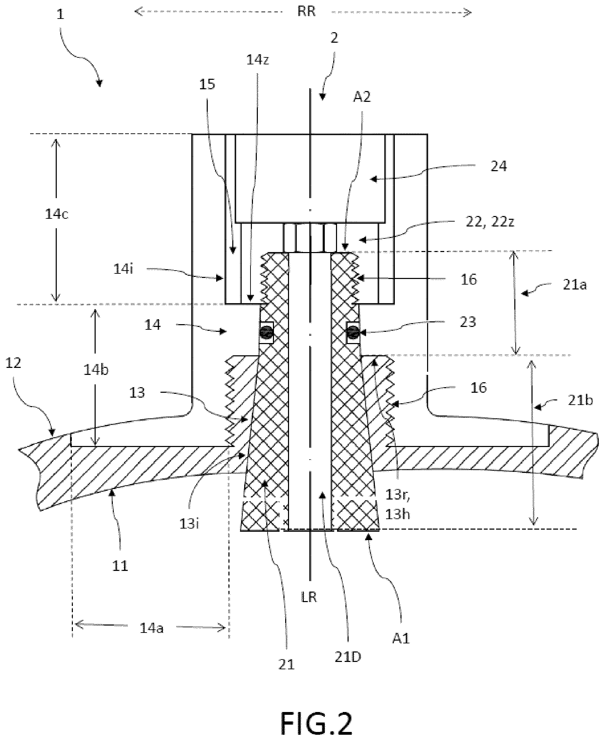

Fig.2 zeigt eine andere Ausführungsform einer erfindungsgemäßen Polkappe 1 mit Druckanschlusselement 2. In dieser Ausführungsform umfasst die Polkappe 1 zusätzlich zu der Polkappe aus Fig.1 des Weiteren ein Aufsatzelement 14, das auf die halsförmige Durchführung 13 aufgesetzt ist. Das Aufsatzelement 14 umfasst dabei einen ersten Kontaktbereich 14a, der sich flächenförmig in radialer Richtung von der halsförmigen Durchführung 13 entlang der Außenseite 12 erstreckt und an die Kontur der Außenseite 12 angepasst und zur Überwicklung mit dem Faserverbundmaterial 3 vorgesehen ist. Die Außenseite 12 besitzt dazu eine Vertiefung, von der das Aufsatzelement 14 so aufgenommen wird, dass die Kontur der Außenseite 12 außerhalb der ersten Kontaktfläche 14a in dem Bereich mit dem ersten Kontaktbereich 14a auf der Außenseite 12 in Richtung der Durchführung 13 ohne Veränderung so fortgesetzt wird. Das Aufsatzelement 14 umfasst des Weiteren einen zweiten Kontaktbereich 14b zum überdecken der halsförmigen Durchführung entlang der Längsrichtung der Durchführung 13. Die Außenform der halsförmigen Durchführung 13 hat hier eine zylindrische Form um ihre die konusförmige Innenform 13i herum. Entsprechend besitzt auch die Innenform des zweiten Kontaktbereichs 14b ebenfalls eine zylindrische Form, die auf die Dimension der Außenform der Durchführung 13 angepasst ist, dass der zweite Kontaktbereich 14b eine Verformung der Außenform der halsförmigen Durchführung 13 in radialer Richtung RR verhindert. Zusätzlich umfasst in dieser Ausführungsform die Außenform der Durchführung 13 am Halsende 13h einen umlaufenden Rand 13r wobei der zweite Kontaktbereich 14b so ausgeformt ist, dass er den umlaufenden Rand 13r nach oben (senkrecht zur Längsrichtung) überdeckt, sodass eine Verformung der Außenform der Durchführung 13 auch senkrecht zur radialen Richtung RR verhindert ist. Der zweite Kontaktbereich 14b erstreckt sich des Weiteren entlang des ersten Abschnitts 21a des Dichtkonus, wobei hier im ersten Abschnitt 21a eine um den ersten Abschnitt 21a umlaufende Dichtung 23, beispielsweise eine O-Ring-Dichtung, zum druckdichten Abdichten gegenüber dem zweiten Kontaktbereich 14b des Aufsatzelements 14 angeordnet ist. Das Aufsatzelement 14 umfasst hier des Weiteren einen dritten Bereich 14c angeordnet in Längsrichtung LR oberhalb des zweiten Kontaktbereichs 14b. Der dritte Bereich 14c umfasst eine dem ersten Abschnitt 21a zugewandte Innenseite 14i, die eine umlaufende Lücke 15 zwischen der Innenseite 14i und dem ersten Abschnitt 21a des Dichtkonus 21 in radialer Richtung RR definiert, damit in dieser Lücke 15 die Zugmutter 22z eines von außen auf dem ersten Abschnitt 21a angeordneten Fixierungsmittels 22 auf dem Dichtkonus 21 angeordnet und auf diesen aufgeschraubt werden kann. Dabei bildet der zweite Kontaktbereich 14b unterhalb des dritten Bereichs 14c einen Auflagebereich 14z für die Zugmutter 22z, sodass zusätzlich das Aufsatzelement 14 mittels der Zugmutter 22z über den auf die halsförmige Durchführung 13 drückenden Auflagebereich 14z auf der Polkappe 1 befestigt ist. Die Form der Zugmutter 22z und das entsprechende Gewinde 16 im zweiten Abschnitt 21b des Dichtkonus 21 kann von Fachmann geeignet ausgestaltet werden. Zusätzlich oder alternativ dazu gemäß anderer Ausführungsformen ist das Aufsatzelement 14 in dieser Ausführungsform mit seinem zweiten Kontaktbereich 14b auf die Außenform der halsförmigen Durchführung 13 aufgeschraubt, wobei das Aufsatzelement 14 hier bis zum direkten Kontakt des ersten Kontaktbereichs 14a mit der Außenseite 12 von oben auf die halsförmige Durchführung 13 aufgeschraubt ist. Hierbei kann für diese Aufschraubung der zweite Kontaktbereich 14b des Aufsatzelements 14 ein selbstschneidendes Gewinde 16 umfassen, sofern das Kunststoffmaterial zumindest der halsförmigen Durchführung 13 der Polkappe 1 ein weiches Kunststoffmaterial ist. In diesem Fall wäre an der halsförmigen Durchführung 13 an ihrer Außenform kein Gewinde angeordnet. Falls das Kunststoffmaterial zum Selbstschneiden zu hart wäre, müssten sich entsprechende Gewinde sowohl an der Außenform der halsförmigen Durchführung 13 als auch an der Innenform des zweiten Kontaktbereichs 14b angeordnet sein. Zum Ein- und Auslassen von Fluiden oder Gasen in/aus dem Druckbehälter hinein/hinaus ist auf dem Dichtkonus 21 ein Ventilaufsatz angeordnet, der entsprechende Einlass- und/oder Auslassöffnungen, eine Bedienvorrichtung für die Einlass- und/oder Auslassöffnungen und gegebenenfalls weitere Komponenten wie beispielsweise eine Druckanzeige umfassen kann.

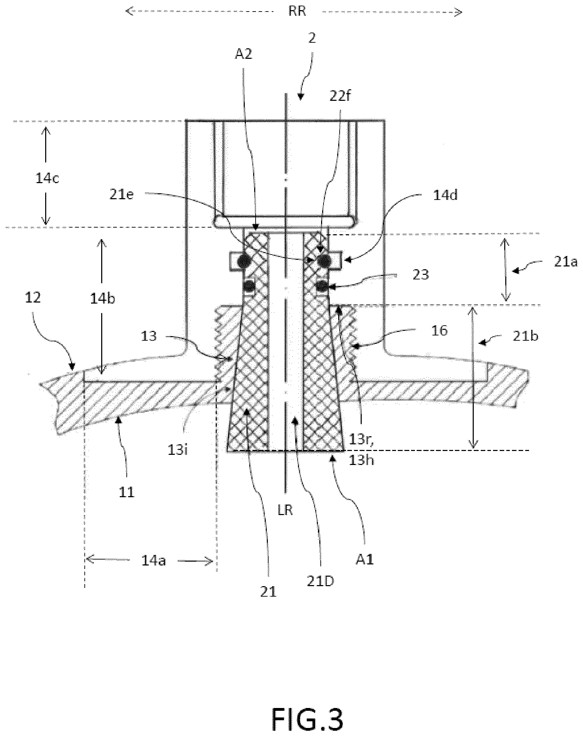

Fig.3 zeigt eine weitere Ausführungsform einer erfindungsgemäßen Polkappe 1 mit Druckanschlusselement 2, wobei die in Fig.2 gezeigte Zugmutter 22z als das Fixierungselement 22 hier durch einen Federring 22f ersetzt wurde. Hierbei erstreckt sich ebenfalls die Innenform des zweiten Kontaktbereichs 14b des Aufsatzelements 14 entlang des ersten Abschnitts 21a des Dichtkonus 21 und besitzt in einem dem ersten Abschnitt 21a gegenüberliegenden Bereich eine Aussparung 14d, in der das von außen auf dem ersten Abschnitt 21a angeordneten Fixierungsmittels 22 in Form eines elastischen Federrings 22f (schwarzer Kreis) angeordnet ist. Der erste Abschnitt 21a des Dichtkonus 21 umfasst eine auf den Federring 22f angepasste Ring-Aussparung 21e (hier vollständig durch den Federring 22f ausgefüllt) an einer darauf angepassten Position entlang der Längsachse LR, in die der Federring 22f nach einem Hineinpressen des Dichtkonus 21 entlang der Längsachse LR in die Durchführung 13 einrastet und so den Dichtkonus 21 in dem hier gezeigten druckdichten Presssitz in der Innenkontur 13i fixiert. Zusätzlich ist hier wie in Fig.2 ein Dichtring 23 angeordnet. Für Details zum Dichtring wird auf Fig.2 verwiesen.

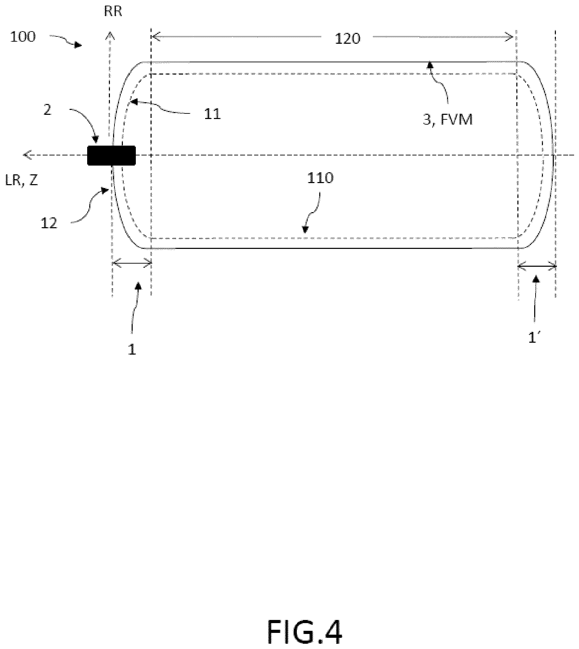

Fig.4 zeigt eine Ausführungsform eines erfindungsgemäßen Druckbehälters 100 mit einer erfindungsgemäßen Polkappe 1. Der faserverstärkte Druckbehälter 100 umfasst dabei einen Innenbehälter 110 aus einem Kunststoffmaterial mit einem zylinderförmigen Mittelteil 120 und zwei jeweils auf beiden Seiten des Mittelteils 120 angeordnete Polkappen 1, 1', die das Mittelteil 120 auf beiden Seiten verschließen. Da sowohl das Mitteilteil 120 als auch die Polkappen 1,1' aus Kunststoffmaterial hergestellt sind, können die Polkappen 1, 1' mit üblichen Schweißverfahren druckdicht mit dem Mittelteil 120 verbunden werden, damit der Innenbehälter 110 vollständig hergestellt ist. Auf den Innenbehälter 110 ist nach dessen Herstellung eine Außenschicht aus Faserverbundmaterial 3 gewickelt, um den Innenbehälter 110 für die gewünschte Anwendung so zu verstärken, dass der resultierende Druckbehälter 100 die notwendige Festigkeit gegen Druckbelastungen besitzt.

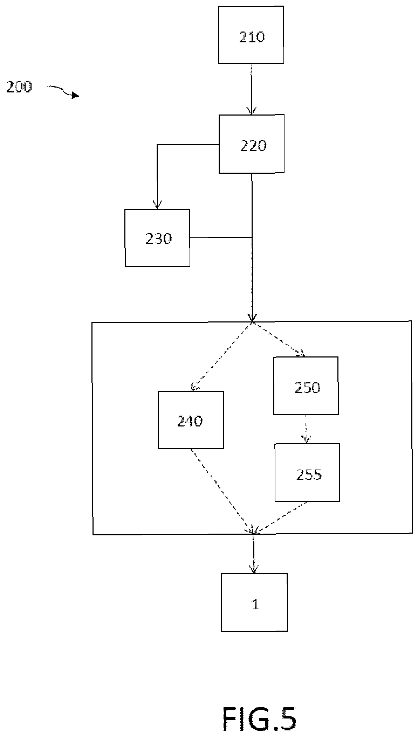

Fig.5 zeigt eine Ausführungsform eines erfindungsgemäßen Verfahrens 200 zur Herstellung der erfindungsgemäßen Polkappe 1. Für die detailspezifische Ausführung der Polkappe ist auch auf die Figuren 1 bis 3 verwiesen. Das Verfahren 200 umfasst die Schritte des Bereitstellens 210 der Polkappe 1 mit einer Innenseite 11 zum späteren Verschluss des Druckbehälters 100, einer Außenseite 12 zur Überwicklung mit einem Faserverbundmaterial 3 nach Verschluss des Druckbehälters 100 und einer halsförmigen aus der Außenseite 12 nach außen herausragenden offene Durchführung 13 mit einer Innenkontur 13i zur nachfolgenden Einführung eines Dichtkonus 21 als Teil eines Druckanschlusselements 2; des Einführens 220 eines Dichtkonus 21 aus Metall von der Innenseite 13i in die Durchführung 13, wobei der Dichtkonus 21 einen ersten Abschnitt 21a und einen sich zumindest im Bereich der Durchführung 13 konusförmig in Richtung des ersten Abschnitts 21a verjüngenden zweiten Abschnitt 21b umfasst, bis der erste Abschnitt 21a nach außen aus der halsförmigen Durchführung 13 herausragt; und des Herstellens 260 eines druckdichten Abschlusses zwischen Dichtkonus 21 und Innenseite 13i der Durchführung 13 mittels von außen auf dem ersten Abschnitt 21a angeordneten Fixierungsmittels 22, das den Dichtkonus in einem druckdichten Presssitz in der Innenkontur 13i hält. Hierbei kann das Verfahren 200 in einer Ausführungsform den weiteren Schritt des Aufsetzens 230 eines Aufsatzelements 14 auf die halsförmige Durchführung 13 zur Verhinderung einer Verformung der Außenform der Durchführung 13 in radialer Richtung RR umfassen, wobei das Aufsatzelement 14 einen ersten Kontaktbereich 14a, der sich flächenförmig in radialer Richtung von der halsförmigen Durchführung 13 entlang der Außenseite 12 erstreckt und an die Kontur der Außenseite 12 angepasst und zur Überwicklung mit dem Faserverbundmaterial 3 vorgesehen ist, und einen zweiten Kontaktbereich 14b mit einer an eine Außenform der halsförmigen Durchführung 13 angepassten Innenform umfasst. Wenn das von außen auf dem ersten Abschnitt 21a angeordnete Fixierungsmittels 22 eine Zugmutter 22z oder ein Federring ist 22f, kann dabei der Schritt des Herstellens 240 des druckdichten Abschlusses einen der Schritt des Ausübens 240 eines Zugs auf den Dichtkonus 21 mittels der von außen auf den ersten Abschnitt 21a aufgeschraubten Zugmutter 22z, oder des Hineinpressens 250 des Dichtkonus 21 in die Durchführung 13, wobei der Dichtkonus 21 im ersten Abschnitt 21a eine auf den Federring 22f angepasste Ring-Aussparung 21e an einer darauf angepassten Position entlang der Längsachse LR umfasst, und ein nachfolgendes Einrasten 255 des Federrings 22f in die Ring-Aussparung 21e des Dichtkonus 21, wobei der Federring 22f in eine Aussparung 14d in der Innenform des zweiten Kontaktbereichs 14b des Aufsatzelements 14, die sich entlang des ersten Abschnitts 21a des Dichtkonus 21 erstreckt, elastisch gehalten wird, umfassen.

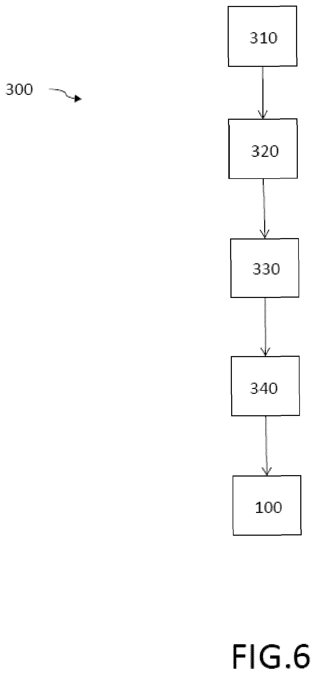

Fig.6 zeigt eine Ausführungsform eines erfindungsgemäßen Verfahrens 300 zur Herstellung eines erfindungsgemäßen faserverstärkten Druckbehälters 100 umfassend die Schritte des Bereitstellens 310 eines zylinderförmigen Mittelteils 21 aus einem Kunststoffmaterial, des Bereitstellens 320 von zwei Polkappen 1,1' aus Kunststoffmaterial zum Verschließen des Mittelteils 120, wovon eine der Polkappen 1,1' eine erfindungsgemäße Polkappe 1 ist, des Verschweißens 330 der Polkappen 1,1' umfassend die Polkappe 1 mit bereits angeschlossenem Druckanschlusselement 2 mit dem Mittelteil 120 zur Herstellung eines Innenbehälters 110 aus Kunststoffmaterial, und des Überwickelns 340 des Innenbehälters 110 mit Faserverbundmaterial 3 zur Herstellung des faserverstärkten Druckbehälters 100. Hierbei werden vorzugsweise alle Flächen des Innenbehälters 110 mit Ausnahme des Druckanschlusselements 2 mit Faserverbundmaterial 3 überwickelt. Das Schweißverfahren zur Herstellung des Innenbehälters 110 (Kunststoffliner) zeichnet sich dadurch aus, dass es sich sowohl für kleine, mittlere und große Stückzahlen eignet, weil die Vorprodukte extrudiertes Rohr (Mitteilteil 120) und spritzgegossene Polkappen 1 sehr einfach und kostengünstig herzustellen sind. Besonders geeignet ist dieses Verfahren 200 dadurch, dass sich nur bei diesem Verfahren Druckanschlusselemente 2 (oder Ventilelemente) von beiden Seiten 11, 12 der Polkappe 1 montieren lassen, wie es bei den anderen Verfahren nicht möglich ist. Dies kann vor dem Schweißprozess durchgeführt werden, solange noch beide Seiten 11, 12 der Polkappe 1 frei zugänglich sind, was bei den anderen Verfahren (Rotomoulding oder Schlauchblasverfahren) nicht oder nur durch die Durchführung 13 (Polkappenöffnung) möglich ist.

Die hier gezeigten Ausführungsformen stellen nur Beispiele für die vorliegende Erfindung dar und dürfen daher nicht einschränkend verstanden werden.

### LISTE DER BEZUGSZEICHEN

- 1, 1': Polkappe
- 11: Innenseite der Polkappe
- 12: Außenseite der Polkappe
- 13: halsförmig aus der Außenseite herausragende Durchführung
- 13i: Innenkontur der Durchführung
- 13h: Halsende der halsförmigen Durchführung
- 13r: umlaufender Rand am Halsende
- 14: Aufsatzelement
- 14a: erster Kontaktbereich des Aufsatzelements
- 14b: zweiter Kontaktbereich des Aufsatzelements
- 14z: Auflagebereich des zweiten Kontaktbereichs für die Zugmutter
- 14c: dritter Bereich des Aufsatzelements
- 14d: Aussparung in der Innenkontur des zweiten Kontaktbereichs
- 14i: Innenseite des dritten Bereichs des Aufsatzelements
- 15: Lücke zwischen der Innenseite 14i und dem ersten Abschnitt 21a
- 16: Gewinde (für Aufsatzelement oder Zugmutter)
- 2: Druckanschlusselement
- 21: Dichtkonus
- 21a: erster Abschnitt der Dichtkonus
- 21b: zweiter Abschnitt der Dichtkonus
- 21D: Durchlasskanal im Dichtkonus
- 21e: Ring- Aussparung im ersten Abschnitt des Dichtkonus
- 22: Fixierungsmittel
- 22f: Federring als das Fixierungsmittel
- 22z: Zugmutter als das Fixierungsmittel
- 23: Dichtung
- 24: Ventilaufsatz
- 3: Außenschicht aus Faserverbundmaterial
- 100: erfindungsgemäßer Druckbehälter
- 110: Innenbehälter
- 120: zylinderförmiges Mittelteil des Innenbehälters
- 200: Verfahren zur Herstellung der erfindungsgemäßen Polkappe
- 210: Bereitstellen der Polkappe
- 220: Einführen des Dichtkonus in die Durchführung
- 230: Aufsetzens eines Aufsatzelements auf die halsförmige Durchführung
- 240: Ausübens eines Zugs auf den Dichtkonus mittels der von außen auf den ersten Abschnitt aufgeschraubten Zugmutter
- 250: Hineinpressens des Dichtkonus in die Durchführung
- 255: nachfolgendes Einrasten des Federrings in die Ring-Aussparung des Dichtkonus
- 260: Herstellen eines druckdichten Abschlusses zwischen Dichtkonus und Innenseite der Durchführung
- 300: Verfahren zur Herstellung des erfindungsgemäßen faserverstärkten Druckbehälters
- 310: Bereitstellen eines zylinderförmigen Mittelteils aus einem Kunststoffmaterial
- 320: Bereitstellen von zwei Polkappen aus Kunststoffmaterial
- 330: Verschweißen der Polkappen mit dem Mittelteil
- 340: Überwickeln des Innenteils mit Faserverbundmaterial

- A1: erste Fläche des Dichtkonus zur Innenseite 11 hin,
- A2: zweite Fläche des Dichtkonus zur Außenseite 12 hin
- FVM: Faserverbundmaterial
- LR: Längsrichtung
- RR: radiale Richtung
- Z: Zylinderachse des zylindrischen Mittelteils

## Patentansprüche

1. Eine Polkappe (1) zum druckdichten Verschluss eines Druckbehälters (100), wobei die Polkappe (1) eine Innenseite (11) zum späteren Verschluss des Druckbehälters (100), eine Außenseite (12) zur Überwicklung mit einem Faserverbundmaterial (3) nach Verschluss des Druckbehälters (100) und eine halsförmige aus der Außenseite nach außen herausragende offene Durchführung (13) mit einer Innenkontur (13i), jeweils aus Kunststoffmaterial umfasst, und ein an die Durchführung (13) zum Verschluss der Durchführung (13) angeschlossenes Druckanschlusselement (2) umfasst, wobei das Druckanschlusselement (2) einen Dichtkonus (21) aus Metall mit einem durch die Durchführung (13) nach außen herausragenden ersten Abschnitt (21 a) und mit einem sich zumindest im Bereich der Durchführung (13) konusförmig in Richtung des ersten Abschnitts (21 a) verjüngenden zweiten Abschnitt (21b) umfasst, der mittels eines von außen auf dem ersten Abschnitt (21 a) angeordneten Fixierungsmittels (22) in einem druckdichten Presssitz in der Innenkontur (13i) gehalten wird,
wobei sich die Innenkontur (13i) zumindest in einem Bereich der Durchführung (13) konusförmig nach außen entlang der Durchführung (13) verjüngt, wobei die konusförmige Innenkontur (13i) passgerecht auf den konusförmigen zweiten Abschnitt (21 b) angepasst ist **dadurch gekennzeichnet, dass** sich die konusförmige Innenkontur (13i) der Durchführung (13) von der Innenseite (11) bis zum Halsende (13h) auf der Außenseite (12) erstreckt.

2. Die Polkappe (1) nach Anspruch 1,
**dadurch gekennzeichnet,**
**dass** der Dichtkonus (21) mit seinem zweiten Abschnitt (21 b) aus der Durchführung (13) über die Innenseite (11) hinausragt.

3. Die Polkappe (1) nach einem der voranstehenden Ansprüche,
**dadurch gekennzeichnet,**
**dass** die Polkappe (1) des Weiteren ein Aufsatzelement (14) zum Aufsetzen auf die halsförmige Durchführung (13) umfasst, wobei das Aufsatzelement (14) einen ersten Kontaktbereich (14a), der sich flächenförmig in radialer Richtung von der halsförmigen Durchführung (13) entlang der Außenseite (12) erstreckt und an die Kontur der Außenseite (12) angepasst und zur Überwicklung mit dem Faserverbundmaterial (3) vorgesehen ist, und einen zweiten Kontaktbereich (14b) umfasst, dessen Innenform an eine Außenform der halsförmigen Durchführung (13) so angepasst ist, dass der zweite Kontaktbereich (14b) eine Verformung der Außenform der halsförmigen Durchführung (13) in radialer Richtung (RR) verhindert.

4. Die Polkappe (1) nach Anspruch 3,
**dadurch gekennzeichnet,**
**dass** die Außenform der Durchführung (13) am Halsende (13h) einen umlaufenden Rand (13r) umfasst und der zweite Kontaktbereich (14b) den umlaufenden Rand (13r) zumindest teilweise überdeckt, sodass eine Verformung der Außenform der Durchführung (13) auch senkrecht zur radialen Richtung (RR) verhindert ist.

5. Die Polkappe (1) nach Anspruch 4,
**dadurch gekennzeichnet,**
**dass** sich der zweite Kontaktbereich (14b) des Weiteren entlang des ersten Abschnitts (21 a) des Dichtkonus (21) erstreckt, wobei der erste Abschnitt (21 a) eine geeignet angeordnete und um den ersten Abschnitt (21 a) umlaufende Dichtung (23) zum druckdichten Abdichten gegenüber dem zweiten Kontaktbereich (14b) des Aufsatzelements (14) umfasst.

6. Die Polkappe (1) nach einem der Ansprüche 3 bis 5,
**dadurch gekennzeichnet,**
**dass** das von außen auf dem ersten Abschnitt (21 a) angeordnete Fixierungsmittel (22) eine auf den ersten Abschnitt (21 a) aufgeschraubte Zugmutter (22z) ist, mit der der zweite Abschnitt (21 b) zum druckdichten Abschluss in die Innenkontur (13i) gepresst ist.

7. Die Polkappe (1) nach Anspruch 6,
**dadurch gekennzeichnet,**
**dass** das Aufsatzelement (14) des Weiteren einen dritten Bereich (14c) in Längsrichtung (LR) oberhalb des zweiten Kontaktbereichs (14b), also in Längsrichtung (LR) gesehen auf der der Innenseite (11) der Polkappe (1) gegenüberliegenden Seite des zweiten Kontaktbereichs (14b), umfasst, der eine dem ersten Abschnitt (21a) zugewandte Innenseite (14i) umfasst, wobei die Innenseite (14i) des dritten Bereichs (14c) so angeordnet ist, dass eine umlaufende Lücke (15) zwischen der Innenseite (14i) und dem ersten Abschnitt (21 a) des Dichtkonus (21) in radialer Richtung (RR) gebildet wird, wobei die Lücke (15) zur Aufnahme der Zugmutter (22) vorgesehen und ausgestaltet ist.

8. Die Polkappe (1) nach einem der Ansprüche 3 bis 5,
**dadurch gekennzeichnet,**
**dass** sich die Innenform des zweiten Kontaktbereichs (14b) des Aufsatzelements (14) entlang des ersten Abschnitts (21 a) des Dichtkonus (21) erstreckt und diese in einem dem ersten Abschnitt (21 a) gegenüberliegenden Bereich eine Aussparung (14d) besitzt, in der das von außen auf dem ersten Abschnitt (21a) angeordneten Fixierungsmittels (22) in Form eines elastischen Federrings (22f) angeordnet ist, und der erste Abschnitt (21 a) des Dichtkonus (21) eine auf den Federring (22f) angepasste Ring-Aussparung (21 e) an einer darauf angepassten Position entlang der Längsachse (LR) umfasst, in die der Federring (22f) nach einem Hineinpressen des Dichtkonus (21) in die Durchführung (13) einrastet und so den Dichtkonus (21) in dem druckdichten Presssitz in der Innenkontur (13i) fixiert.

9. Die Polkappe (1) nach einem der Ansprüche 3 bis 8,
**dadurch gekennzeichnet,**
**dass** das Aufsatzelement (14) mit seinem zweiten Kontaktbereich (14b) auf die Außenform der halsförmigen Durchführung (13) aufgeschraubt ist, vorzugsweise sind dabei das Aufsatzelement (14) und die halsförmige Durchführung (13) so ausgestaltet sind, dass das Aufsatzelement (14) bis zum direkte Kontakt des ersten Kontaktbereichs (14a) auf der Außenseite (12) von oben auf die halsförmige Durchführung (13) aufgeschraubt ist.

10. Die Polkappe (1) nach Anspruch 9,
**dadurch gekennzeichnet,**
**dass** das Kunststoffmaterial zumindest der halsförmigen Durchführung (13) der Polkappe (1) ein weiches Kunststoffmaterial ist und der zweite Kontaktbereich (14b) des Aufsatzelements (14) mit einem Gewinde (16) zum selbstschneidenden Aufschrauben auf die Polkappe (1) versehen ist.

11. Ein faserverstärkter Druckbehälter (100) umfassend einen Innenbehälter (110) aus einem Kunststoffmaterial umfassend ein zylinderförmiges Mittelteil (120) und zwei das Mittelteil (120) jeweils auf beiden Seiten verschließende Polkappen (1, 1') und eine auf den Innenbehälter (110) gewickelte Außenschicht aus Faserverbundmaterial (3), wobei eine der Polkappen (1) nach Anspruch 1 ausgestaltet ist.

12. Ein Verfahren (200) zur Herstellung einer Polkappe (1) nach Anspruch 1 umfassend die Schritte
- Bereitstellen (210) der Polkappe (1) mit einer Innenseite (11) zum späteren Verschluss des Druckbehälters (100), einer Außenseite (12) zur Überwicklung mit einem Faserverbundmaterial (3) nach Verschluss des Druckbehälters (100) und einer halsförmigen aus der Außenseite (12) nach außen herausragenden offene Durchführung (13) mit einer Innenkontur (13i) zur nachfolgenden Einführung eines Dichtkonus (21) als Teil eines Druckanschlusselements (2);
- Einführen (220) eines Dichtkonus (21) aus Metall von der Innenseite (13i) in die Durchführung (13), wobei der Dichtkonus (21) einen ersten Abschnitt (21 a) und einen sich zumindest im Bereich der Durchführung (13) konusförmig in Richtung des ersten Abschnitts (21 a) verjüngenden zweiten Abschnitt (21 b) umfasst, bis der erste Abschnitt (21 a) nach außen aus der halsförmigen Durchführung (13) herausragt, Herstellen (260) eines druckdichten Abschlusses zwischen Dichtkonus (21) und Innenseite (13i) der Durchführung (13) mittels von außen auf dem ersten Abschnitt (21a) angeordneten Fixierungsmittels (22), das den Dichtkonus in einem druckdichten Presssitz in der Innenkontur (13i) hält.

13. Das Verfahren (200) zur Herstellung einer Polkappe nach Anspruch 12 umfassend den weiteren Schritt des Aufsetzens (230) eines Aufsatzelements (14) auf die halsförmige Durchführung (13) zur Verhinderung einer Verformung der Außenform der Durchführung (13) in radialer Richtung (RR), wobei das Aufsatzelement (14) einen ersten Kontaktbereich (14a), der sich flächenförmig in radialer Richtung von der halsförmigen Durchführung (13) entlang der Außenseite (12) erstreckt und an die Kontur der Außenseite (12) angepasst und zur Überwicklung mit dem Faserverbundmaterial (3) vorgesehen ist, und einen zweiten Kontaktbereich (14b) mit einer an eine Außenform der halsförmigen Durchführung (13) angepassten Innenform umfasst.

14. Das Verfahren (200) zur Herstellung einer Polkappe nach Anspruch 13, wobei als das von außen auf dem ersten Abschnitt (21 a) angeordnete Fixierungsmittels (22) eine Zugmutter (22z) oder ein Federring ist (22f), umfasst der Schritt des Herstellens (240) des druckdichten Abschlusses einen der Schritt des
- Ausübens (240) eines Zugs auf den Dichtkonus (21) mittels der von außen auf den ersten Abschnitt (21a) aufgeschraubten Zugmutter (22z), oder
- Hineinpressens (250) des Dichtkonus (21) in die Durchführung (13), wobei der Dichtkonus im ersten Abschnitt (21 a) eine auf den Federring (22f) angepasste Ring-Aussparung (21 e) an einer darauf angepassten Position entlang der Längsachse (LR) umfasst, und nachfolgendes Einrasten (255) des Federrings (22f) in die Ring-Aussparung des Dichtkonus, wobei der Federring (22f) in eine Aussparung (14d) in der Innenform des zweiten Kontaktbereichs (14b) des Aufsatzelements (14), die sich entlang des ersten Abschnitts (21 a) des Dichtkonus (21 ) erstreckt, elastisch gehalten wird.

15. Das Verfahren (300) zur Herstellung einer Polkappe (1) gemäß Anspruch 12, weiter umfassend die Schritte:
- Bereitstellen (310) eines zylinderförmigen Mittelteils (21) aus einem Kunststoffmaterial,
- Bereitstellen (320) von zwei Polkappen (1, 1') aus Kunststoffmaterial zum Verschließen des Mittelteils (120), wovon zumindest eine der Polkappen (1, 1') eine Polkappe (1) nach Anspruch 1 ist,
- Verschweißen (330) der Polkappen (1, 1') umfassend die Polkappe (1) mit bereits angeschlossenem Druckanschlusselement (2) mit dem Mittelteil (120) zur Herstellung eines Innenbehälters (2) aus Kunststoffmaterial, und
- Überwickeln (340) des Innenbehälters (110) mit Faserverbundmaterial (3) zur Herstellung des faserverstärkten Druckbehälters (100) nach Anspruch 11.

## Claims

1. A pole cap (1) for the pressure-tight closure of a pressure vessel (100), wherein the pole cap (1) comprises an inner face (11) for the future closure of the pressure vessel (100), an outer face (12) for winding of a fiber composite material (3) thereon after closure of the pressure vessel (100) and a neck-shaped open duct (13) which protrudes outward from the outer face and has an inner contour (13i), each made of plastic material, and comprises a pressure port element (2) connected to the duct (13) for the closure of the duct (13), wherein the pressure port element (2) comprises a seal cone (21) made of metal with a first section (21a) protruding outward through the duct (13) and with a second section (21b) tapering at least in the area of the duct (13) in a cone-shaped manner in the direction of the first section (21a), which is held in the inner contour (13i) by a fixing means (22) arranged on the first section (21a) from the outside in a pressure-tight press fit, wherein the inner contour (13i) tapers outward along the duct (13) at least in an area of the duct (13) in a cone-shaped manner, wherein the cone-shaped inner contour (13i) is adapted accurately to the cone-shaped second section (21b);
**characterized in that**
the cone-shaped inner contour (13i) of the duct (13) extends from the inner face (11) to the neck end (13h) on the outer face (12).

2. The pole cap (1) according to claim 1,
**characterized in that**
the seal cone (21) protrudes with its second section (21b) from the duct (13) beyond the inner face (11).

3. The pole cap (1) according to one of the preceding claims,
**characterized in that**
the pole cap (1) furthermore comprises an attachment element (14) for attaching to the neck-shaped duct (13), wherein the attachment element (14) comprises a first contact area (14a), which extends in a planar manner in the radial direction from the neck-shaped duct (13) along the outer face (12) and is adapted to the contour of the outer face (12) and provided to be covered by winding with the fiber composite material (3), and comprises a second contact area (14b), whose inner shape is adapted to an outer shape of the neck-shaped duct (13) in such a way, that the second contact area (14b) prevents a deforming of the outer shape of the neck-shaped duct (13) in the radial direction (RR).

4. The pole cap (1) according to claim 3,
**characterized in that**
the outer shape of the duct (13) at the neck end (13h) comprises a circumferential edge (13r) and the second contact area (14b) covers the circumferential edge (13r) at least partially, so that a deforming of the outer shape of the duct (13) is also prevented perpendicularly to the radial direction (RR).

5. The pole cap (1) according to claim 4,
**characterized in that**
furthermore, the second contact area (14b) extends along the first section (21a) of the seal cone (21), wherein the first section (21a) comprises a seal (23) which is arranged suitably and circumferential around the first section (21a) for pressure-tight sealing with respect to the second contact area (14b) of the attachment element (14).

6. The pole cap (1) according to one of claims 3 to 5,
**characterized in that**
the fixing means (22), which is arranged from the outside on the first section (21a), is a clamping nut (22z) screwed onto the first section (21a), by means of which the second section (21b) is pressed into the inner contour (13i) for pressure-tight sealing.

7. The pole cap (1) according to claim 6,
**characterized in that**
the attachment element (14) further comprises a third area (14c) in the longitudinal direction (LR) above the second contact area (14b), that is, seen in the longitudinal direction (LR), on the side of the second contact area (14b) which is opposite the inner face (11) of the pole cap (1); which third area comprises an inner face (14i) facing the first section (21a), wherein the inner face (14i) of the third area (14c) is arranged in such a manner that a circumferential gap (15) is formed between the inner face (14i) and the first section (21a) of the seal cone (21) in the radial direction (RR), wherein the gap (15) is provided and designed for receiving the clamping nut (22).

8. The pole cap (1) according to one of claims 3 to 5,
**characterized in that**
the inner shape of the second contact area (14b) of the attachment element (14) extends along the first section (21a) of the seal cone (21) and has a recess (14d) in an area opposite the first section (21a) in which recess the fixing means (22), which is arranged from the outside on the first section (21a), is arranged in the form of an elastic split washer (22f), and the first section (21a) of the seal cone (21) comprises an annular recess (21e), adapted to the split washer (22f), in a position adapted thereto along the longitudinal axis (LR), in which the split washer (22f), after a pressing-in of the seal cone (21) into the duct (13), locks into place and thus fixes the seal cone (21) in the pressure-tight press fit in the inner contour (13i).

9. The pole cap (1) according to one of claims 3 to 8,
**characterized in that**
the attachment element (14) is screwed onto the outer shape of the neck-shaped duct (13) with its second contact area (14b); preferably the attachment element (14) and the neckshaped duct (13) are configured in such a manner that the attachment element (14) is screwed onto the neck-shaped duct (13) from above until direct contact of the first contact area (14a) with the outer face (12) occurs.

10. The pole cap (1) according to claim 9,
**characterized in that**
the plastic material of at least the neck-shaped duct (13) of the pole cap (1) is a soft plastic material and the second contact area (14b) of the attachment element (14) is provided with a thread (16) for self-cutting screwing onto the pole cap (1).

11. A fiber-reinforced pressure vessel (100) comprising an inner vessel (110) made of plastic material comprising a cylinder-shaped central part (120) and two pole caps (1, 1') respectively closing the central part (120) on both sides and an outer layer wound on the inner vessel (110) and made of fiber composite material (3), wherein one of the pole caps (1) is configured according to claim 1.

12. A method (200) for producing a pole cap (1) according to claim 1, comprising the steps of
- providing (210) the pole cap (1) with an inner face (11) for future closure of the pressure vessel (100), an outer face (12) for winding a fiber composite material (3) thereon after closure of the pressure vessel (100) and a neck-shaped duct (13) protruding from the outer face (12) outward with an inner contour (13i) for the subsequent introduction of a seal cone (21) as part of a pressure port element (2);
- introducing (220) a seal cone (21) made of metal from the inner face (13i) into the duct (13), wherein the seal cone (21) comprises a first section (21a) and a second section (21b) tapering at least in the area of the duct (13) in a cone-shaped manner in the direction of the first section (21a) until the first section (21a) protrudes outward from the neck-shaped duct (13);
- establishing (260) a pressure-tight sealing between seal cone (21) and inner face (13i) of the duct (13) by a fixing means (22), which is arranged from the outside on the first section (21a), and which holds the seal cone in a pressure-tight press fit in the inner contour (13i).

13. The method (200) of manufacturing a pole cap according to claim 12, comprising the further step of attaching (230) an attachment element (14) to the neck-shaped duct (13) for preventing a deforming of the outer shape of the duct (13) in the radial direction (RR), wherein the attachment element (14) comprises a first contact area (14a), which extends in planar fashion in the radial direction from the neck-shaped duct (13) along the outer face (12) and is adapted to the contour of the outer face (12) and is provided to be covered by the fiber composite material (3) to be wound thereon, and a second contact area (14b) with an inner shape adapted to an outer shape of the neck-shaped duct (13).

14. The method (200) of manufacturing a pole cap according to claim 13, wherein the fixing means (22), which is arranged from the outside on the first section (21a), is a clamping nut (22z) or a split washer (22f); the step for establishing (240) the pressure-tight sealing comprises one of the steps of
- exerting (240) a tensile force on the seal cone (21) by means of the clamping nut (22z) screwed onto the first section (21a) from the outside, or
- pressing (250) the seal cone (21) into the duct (13), wherein the seal cone comprises in the first section (21a) an annular recess (21e), which is adapted to the split washer (22f), in a position adapted thereto along the longitudinal axis (LR), and subsequent lock-in (255) of the split washer (22f) into the annular recess of the seal cone, wherein the split washer (22f) is held elastically in a recess (14d) in the inner shape of the second contact area (14b) of the attachment element (14), which extends along the first section (21a) of the seal cone (21).

15. A method (300) for producing a pole cap (1) according to Claim 12, further comprising the steps of:
- providing (310) a cylinder-shaped central part (21) made of a plastic material;
- providing (320) two pole caps (1, 1') made of a plastic material for the closure of the central part (120), at least one of the pole caps (1, 1') being a pole cap (1) according to claim 1;
- welding (330) the pole caps (1, 1') comprising the pole cap (1) with a pressure port element (2) already connected to the central part (120) for producing an inner vessel (2) made of plastic material; and
- winding (340) fiber composite material (3) on the inner vessel (110) for producing the fiber-reinforced pressure vessel (100) according to Claim 11.

## Revendications

1. Calotte polaire (1) pour la fermeture étanche à la pression d'un récipient sous pression (100), sachant que la calotte polaire (1) comprend un côté intérieur (11) pour la fermeture ultérieure du récipient sous pression (100), un côté extérieur (12) pour l'enrobage avec un matériau composite à fibres (3) après fermeture du récipient sous pression (100) et un passage (13) en forme de col, ouvert faisant saillie du côté extérieur vers l'extérieur avec un contour intérieur (13i), respectivement en matière plastique et un élément de raccord par pression (2) raccordé au passage (13) pour la fermeture du passage (13), sachant que l'élément de raccord par pression (2) comprend un cône d'étanchéité (21) en métal avec une première section (21a) faisant saillie à travers le passage (13) vers l'extérieur et avec une deuxième section (21b) se réduisant au moins dans la zone du passage (13) en forme de cône en direction de la première section (21a), qui est maintenue au moyen d'un moyen de fixation (22) disposé de l'extérieur sur la première section (21a) dans un ajustage sans jeu étanche à la pression dans le contour intérieur (13i),
sachant que le contour intérieur (13i) se réduit au moins dans une zone du passage (13) en forme de cône vers l'extérieur le long du passage (13), sachant que le contour intérieur en forme de cône (13i) est adapté parfaitement à la deuxième section en forme de cône (21b),
**caractérisée en ce que** le contour intérieur en forme de cône (13i) du passage (13) s'étend du côté intérieur (11) jusqu'à l'extrémité de col (13h) sur le côté extérieur (12).

2. Calotte polaire (1) selon la revendication 1,
**caractérisée en ce que**
le cône d'étanchéité (21) dépasse avec sa deuxième section (21b) du passage (13) sur le côté intérieur (11).

3. Calotte polaire (1) selon l'une quelconque des revendications précédentes,
**caractérisée en ce que**
la calotte polaire (1) comprend par ailleurs un élément de mise en place (14) pour la dépose sur le passage en forme de col (13), sachant que l'élément de mise en place (14) comprend une première zone de contact (14a), qui s'étend en surface en direction radiale du passage en forme de col (13) le long du côté extérieur (12) et adaptée au contour du côté extérieur (12) et est prévue pour l'enrobage avec un matériau composite à fibres (3) et une deuxième zone de contact (14b), dont la forme intérieure est adaptée à une forme extérieur du passage en forme de col (13) de telle manière que la deuxième zone de contact (14b) évite une déformation de la forme extérieure du passage en forme de col (13) en direction radiale (RR).

4. Calotte polaire (1) selon la revendication 3,
**caractérisé en ce que**
la forme extérieure du passage (13) comprend à l'extrémité de col (13h) un bord périphérique (13r) et la deuxième zone de contact (14b) recouvre au moins en partie le bord périphérique (13r) de telle manière qu'une déformation de la forme extérieure du passage (13) est également évitée perpendiculairement à la direction radiale (RR).

5. Calotte polaire (1) selon la revendication 4,
**caractérisée en ce que**
la deuxième zone de contact (14b) s'étend par ailleurs le long de la première section (21a) du cône d'étanchéité (21), sachant que la première section (21a) comprend un joint d'étanchéité (23) disposé de façon adaptée et périphérique autour de la première section (21a) pour l'étanchement étanche à la pression par rapport à la deuxième zone de contact (14b) de l'élément de mise en place (14).

6. Calotte polaire (1) selon l'une quelconque des revendications 3 à 5,
**caractérisée en ce que**
le moyen de fixation (22) disposé de l'extérieur sur la première section (21a) est un écrou de serrage (22z) vissé sur la première section (21a) avec lequel la deuxième section (21b) est comprimée dans le contour intérieur (13i) pour la fermeture étanche à la pression.

7. Calotte polaire (1) selon la revendication 6,
**caractérisée en ce que**
l'élément de mise en place (14) comprend par ailleurs une troisième zone (14c) en direction longitudinale (LR) au-dessus de la deuxième zone de contact (14b), donc vue dans la direction longitudinale (LR) sur le côté opposé au côté intérieur (11) de la calotte polaire (1) de la deuxième zone de contact (14b), qui comprend un côté intérieur (14i) opposé à la première section (21a), sachant que le côté intérieur (14i) de la troisième zone (14c) est disposé de telle manière qu'un interstice périphérique (15) est formé en direction radiale (RR) entre le côté intérieur (14i) et la première section (21a) du cône d'étanchéité (21), sachant que l'interstice (15) est prévu et configuré pour loger l'écrou de serrage (22).

8. Calotte polaire (1) selon l'une quelconque des revendications 3 à 5,
**caractérisé en ce que**
la forme intérieure de la deuxième zone de contact (14b) de l'élément de mise en place (14) s'étend le long de la première section (21a) du cône d'étanchéité (21) et celle-ci possède un évidement (14d) dans une zone opposée à la première section (21a), dans lequel le moyen de fixation (22) disposé de l'extérieur sur la première section (21a) est disposé sous la forme d'une rondelle Grower élastique (22f) et la première section (21a) du cône d'étanchéité (21) comprend un évidement annulaire (21e) adapté à la rondelle Grower (22f) sur une position adaptée à cela le long de l'axe longitudinal (LR) dans lequel s'enclenche la rondelle Grower (22f) après enfoncement du cône d'étanchéité (21) dans le passage (13) et fixe ainsi le cône d'étanchéité (21) en ajustage sans jeu étanche à la pression dans le contour intérieur (13i).

9. Calotte polaire (1) selon l'une quelconque des revendications 3 à 8,
**caractérisé en ce que**
l'élément de mise en place (14) est vissé avec sa deuxième zone de contact (14b) sur la forme extérieure du passage en forme de col (13), l'élément de mise en place (14) et le passage en forme de col (13) étant à cet effet configurés de préférence de telle manière que l'élément de mise en place (14) est vissé jusqu'au contact direct de la première zone de contact (14a) sur le côté extérieur (12) depuis le haut sur le passage en forme de col (13).

10. Calotte polaire (1) selon la revendication 9,
**caractérisé en ce que**
le matériau de matière plastique au moins du passage en forme de col (13) de la calotte polaire (1) est une matière plastique molle et la deuxième zone de contact (14b) de l'élément de mise en place (14) est dotée d'un filetage (16) pour le vissage autotaraudant sur la calotte polaire (1).

11. Récipient sous pression renforcé par des fibres (100) comprenant un réservoir intérieur (110) en matière plastique comprenant une partie médiane cylindrique (120) et deux calottes polaires (1, 1') fermant respectivement la partie médiane (120) sur les deux côtés et une couche extérieure enrobée sur le réservoir intérieur (110) en matériau composite à fibres (3), sachant qu'une des calottes polaires (1) est configurée selon la revendication 1.

12. Procédé (200) de fabrication d'une calotte polaire (1) selon la revendication 1 comprenant les étapes de
- fourniture (210) de la calotte polaire (1) avec un côté intérieur (11) pour la fermeture ultérieure du récipient sous pression (100), un côté extérieur (12) pour l'enrobage avec un matériau composite à fibres (3) après fermeture du récipient sous pression (100) et un passage (13) en forme de col ouvert du côté extérieur (12) faisant saillie vers l'extérieur avec un contour intérieur (13i) pour l'introduction consécutive d'un cône d'étanchéité (21) en tant que partie de l'élément de raccord par pression (2);
- introduction (220) d'un cône d'étanchéité (21) en métal du côté intérieur (13i) dans le passage (13), sachant que le cône d'étanchéité (21) comprend une première section (21a) et une deuxième section (21b) se réduisant au moins dans la zone du passage (13) en forme de cône en direction de la première section (21a) jusqu'à ce que la première section (21a) fasse saillie vers l'extérieur du passage en forme de col (13);
- fabrication (260) d'une fermeture étanche à la pression entre le cône d'étanchéité (21) et le côté intérieur (13i) du passage (13) au moyen de moyen de fixation (22) disposé de l'extérieur sur la première section (21a), qui maintient le cône d'étanchéité dans un ajustage sans jeu étanche à la pression dans le contour intérieur (13i).

13. Procédé (200) de fabrication d'une calotte polaire selon la revendication 12, comprenant l'autre étape de mise en place (230) d'un élément de mise en place (14) sur le passage en forme de col (13) pour éviter une déformation de la forme extérieure du passage (13) dans la direction radiale (RR), sachant que l'élément de mise en place (14) comprend une première zone de contact (14a), qui s'étend en surface en direction radiale du passage en forme de col (13) le long du côté extérieur (12) et est adaptée au contour du côté extérieur (12) et est prévue pour l'enrobage avec le matériau composite à fibres (3) et une deuxième zone de contact (14b) avec une forme intérieure adaptée à une forme extérieure du passage en forme de col (13).

14. Procédé (200) de fabrication d'une calotte polaire selon la revendication 13, sachant que lorsque le moyen de fixation (22) disposé de l'extérieur sur la première section (21a) est un écrou de serrage (22z) ou une rondelle Grower (22f), l'étape de fabrication (240) de la fermeture étanche à la pression comprend une des étapes
- d'exercice (240) d'une traction sur le cône d'étanchéité (21) au moyen de l'écrou de serrage (22z) vissé de l'extérieur sur la première section (21a), ou
d'enfoncement (250) du cône d'étanchéité (21) dans le passage (13), sachant que le cône d'étanchéité comprend dans la première section (21a) un évidement annulaire (21e) adapté à la rondelle Grower (22f) sur une position adaptée à cela le long de l'axe longitudinal (LR) et d'enclenchement consécutif (255) de la rondelle Grower (22f) dans l'évidement annulaire du cône d'étanchéité, sachant que la rondelle Grower (22f) est maintenue de façon élastique dans un évidement (14d) dans la forme intérieure de la deuxième zone de contact (14b) de l'élément de mise en place (14), qui s'étend le long de la première section (21a) du cône d'étanchéité (21).

15. Procédé (300) de fabrication d'une calotte polaire (1) selon la revendication 12, comprenant en plus les étapes de:
- fourniture (310) d'une partie médiane cylindrique (21) en matière plastique,
- fourniture (320) de deux calottes polaires (1, 1') en matière plastique pour fermer la partie médiane (120), desquelles au moins une des calottes polaires (1, 1') est une calotte polaire (1) selon la revendication 1,
- soudure (330) des calottes polaires (1, 1') comprenant la calotte polaire (1) avec l'élément de raccord par pression déjà raccordé (2) avec la partie médiane (120) pour la fabrication d'un réservoir intérieur (2) en matière plastique, et
- enrobage (340) du réservoir intérieur (110) avec un matériau composite à fibres (3) pour la fabrication du récipient sous pression renforcé par des fibres (100) selon la revendication 11.
